# EUROPÄISCHE PATENTSCHRIFT

(11) **EP 2 123 602 B1**
(45) Veröffentlichungstag und Bekanntmachung des Hinweises auf die Patenterteilung: **16.01.2013**
(21) Anmeldenummer: 09159056.2
(22) Anmeldetag: 29.04.2009
(51) Int. Cl.: C01B 31/02, B82B 3/00, H01L 29/78, B01J 23/38, B01J 23/44, B01J 23/74, B01J 35/00, B01J 37/00, B01J 37/16, H01L 51/00, H01L 51/05

(54) **Verfahren zur Herstellung für Kohlenstoffnanoröhrchen, durch das Verfahren hergestellte Kohlenstoffnanoröhrchen und deren Verwendung**
Method for producing carbon nanotubes, carbon nanotubes produced according to the method and use of same
Procédé de fabrication de nanotubes de carbone, nanotubes de carbone fabriqués à l'aide du procédé et leur utilisation

(30) Priorität: 02.05.2008 DE 102008023229
(43) Veröffentlichungstag der Anmeldung: 25.11.2009
(73) Patentinhaber: Helmholtz-Zentrum Dresden - Rossendorf e.V., 01328 Dresden (DE)
(72) Erfinder: Pollmann, Katrin, Dr., 01325 Dresden (DE); Abrasonis, Gintautas, Dr., 01099 Dresden (DE); Raff, Johannes, dr., 01324 Dresden (DE)

(56) Entgegenhaltungen:
- US-A1- 2005 025 696
- US-A1- 2005 269 285
- PUM D ET AL: "The application of bacterial S-layers in molecular nanotechnology" 1. Januar 1999 (1999-01-01), TRENDS IN BIOTECHNOLOGY, ELSEVIER PUBLICATIONS, CAMBRIDGE, GB, PAGE(S) 8 - 12 , XP004155527 ISSN: 0167-7799 * Seite 8, Spalte 1, Absatz 3 - Seite 8, Spalte 2, Absatz 2 * * Seite 10, Spalte 2, Absatz 3 - Seite 11, Spalte 1, Absatz 3 * * Seite 11, Spalte 2, Absatz 2 *

## Beschreibung

### Technisches Anwendungsgebiet

Die vorliegende Erfindung betrifft ein Verfahren zur kontrollierten Herstellung von regelmäßig angeordneten homogenen Kohlenstoffnanoröhrchen zur Verwendung in der Halbleitertechnologie und in der Pharmazie.

### Stand der Technik:

Kohlenstoffnanoröhrchen sind Röhren im Nanomaßstab, die aus einer oder mehreren Schichten graphitartig hochgradig geordneter Kohlenstoffatome bestehen. In Abhängigkeit von der Struktur der Kohlenstoffnanoröhrchen bilden sie unterschiedliche elektronische Eigenschaften aus, die denen eines halbleitenden bis zu metallischen Materials entsprechen. Aufgrund dieser elektronischen Eigenschaften und ihrer Größe können Kohlenstoffnanoröhrchen eine breite Anwendung als elektronische Bauelemente finden. Insbesondere ihr Einsatz als Nanotransistoren in der Computerindustrie ist erfolgversprechend. Die Kopplung der Nanoröhrchen mit organischen Molekülgruppen bietet weitere Anwendungsmöglichkeiten in der Sensorik. Eine weitere Einsatzmöglichkeit bieten medizinische Anwendungen. Hierbei kommen Hybride von Kohlenstoffnanoröhrchen und organischen Molekülen wie Pharmaka und DNA zum Einsatz. Kohlenstoffnanoröhrchen können dabei als Vehikel verwendet werden, um die Wirkstoffe oder, im Falle von Gentherapien, DNA, gezielt in Zellen einzuschleusen. Weiterhin werden Kohlenstoffnanoröhrchen z. B. als ultraleichte Faserverstärkung in neuen Verbundwerkstoffen oder in Gleit- und Schmiermitteln oder als elektrisch/thermisch leitende Komponente in Polymeren verwendet.

Für die Anwendung der Kohlenstoffnanoröhrchen in der Nanotechnologie sind ihre kontrollierte Synthese, Homogenität und Ausbeute essentiell, was trotz vieler Verbesserungen eine große Herausforderung bleibt. Ausgangspunkte und Katalysatoren für die Synthese der Nanoröhrchen bilden bei katalytischen Verfahren anorganische Nanopartikel, z.B. Gold-, Platin-, Palladium-, Silber-, Eisen-, Kobalt- und Nickel-Partikel (Takagi et al., Nanoletters 2006,6,2642-2645).

Einer der Pioniere der Erforschung von Kohlenstoffnanoröhrchen (carbon nano tubes, CNT) ist S. Iijima (1991, Nature 354, 56-58). Seither sind für ihre Synthese eine Vielzahl unterschiedlicher Verfahren entwickelt worden. Diese Methoden umfassen z. B. Lichtbogen-, Laserablations- und katalytische Verfahren. Bereits die Erfindung EP0305556A1 beschreibt einen eisenhaltigen Katalysator, an dem verschiedenste Kohlenwasserstoffe bei hohen Temperaturen oberhalb von 800-1000°C zersetzt werden. Generell kann bei den katalytischen Verfahren zwischen der Abscheidung an geträgerten Katalysator-Partikeln und der Abscheidung an *in situ* gebildeten Metallzentren mit Durchmessern im Nanometerbereich (Flow-Verfahren) unterschieden werden. Bei der Herstellung über die katalytische Abscheidung von Kohlenstoff aus bei Reaktionsbedingungen gasförmigen Kohlenwasserstoffen (CCVD-Verfahren) werden Katalysatoren verwendet, die Metalle, Metalloxide oder reduzierbare Metallkomponenten wie z.B. Fe, Mo, Ni, V, Mn, Co, Cu oder Kombinationen hieraus beinhalten (z.B. EP0619388, US5982102, Dujardin E. et al. (2000) Solid state communications, Elsevier USA, vol. 14, pp. 543-546). Die Ausbeute, Reinheit und Homogenität der Nanoröhrchen wird durch die Elementzusammensetzung der Katalysatoren, von Eduktgas und -konzentration, aber auch durch die Verwendung und Zusammensetzung von Trägermaterialien beeinflusst. Durch die Verwendung eines Trägers für den Katalysator wird die Aktivität des Katalysators beeinflusst und die Syntheserate und Ausbeute der Kohlenstoffnanoröhrchen wird erhöht. Weiterhin wird auch die Selektivität des Katalysators durch die Wechselwirkungen des Katalysators mit dem Trägermaterial beeinflusst. Als Beispiele für verwendete Trägematerialien seien Silizium (P. Piedigrosso et al., Phys. Chem. Chem. Phys. 2,163-170 (200)), Aluminium (I. Willems et. al., Chem. Phys.Lett. -317, 71-76 (2000)), Silizium-Aluminium-Verbindungen (Kukovecs, A. et al., Phys. Chem. Chem. Phys. 2, 3071-3076 (2000)), Magnesiumoxid (J.F. Colomer et al., Chem. Phys. Lett. 317,83-89(2000)), Calciumoxid (C.Ping et al., CN 1170631 A), Titanoxid (Carbon 39, 2277-2289 (2001)), Cerium-Oxid (L. Ji et al. , Appl. Chem. 72,327- 331 (2000) ), Zeolithe (K. Hernadi et al., Zeolites 17, 416-423 (1996)) und Graphit (V. Ivanov et al. Carbon 33, 1727-1738 (1995)) genannt. In WO03/004410 und US 5982102 werden Katalysatoren auf der Basis der Elemente Fe, Co, Ni, V, Mo, Cu auf besonders ausgewählten Trägem ausgeführt. Hierbei werden die Träger, bestehend aus Hydroxiden (z.B. Ca(OH)₂, Mg(OH)₂, Al(OH)₃) oder Carbonaten (z.B. CaCO₃, MgCO₃, Ce₂(CO₃)₃), separat hergestellt und die katalytisch aktive Komponente wird auf den Träger mit einem Ni- oder Co-basierenden Katalysator aufgebracht. Hierbei geht der Abscheidung der Katalysatorschicht eine gezielte Bekeimung des Trägermaterials mit Palladium voraus, wodurch die Abstände zwischen den Kohlenstoffnanoröhrchen vordefiniert werden soll. Durch diese besondere Träger/Partikelkonfiguration sollen optimale Strukturen, wie z.B. eine parallele Ausrichtung der Nanoröhrchen, erhalten werden, die eine gute Dispergierbarkeit erlauben. Das Verfahren hierzu ist jedoch technologisch sehr aufwendig.

In der US 2005 / 0269285 A1 wird ein lithographisches Verfahren zur Erzeugung regelmäßig angeordneter Metallkatalysatoren unter Verwendung einer positiven Maske aus organischen Supramolekülen beschrieben, wobei die Supramoleküle zu zylinderförmigen oder zu hexagonalen Strukturen assemblieren sollen.

Die US 2005/00256696 A1 beschreibt ein Verfahren zur Synthese von CNTS über die katalytische Abscheidung von Kohlenstoff aus bei Reaktionsbedingungen gasförmigen Kohlenstoffen (Chemical Vapor Deposition - CVD-Verfahren).

Allen aus dem Stand der Technik bekannten Verfahren ist gemein, dass die erzeugten CNTs, die durch das Verhältnis Katalysatormenge/Menge an erzeugten CNTs bestimmt wird, unbefriedigend ist und damit der technische Aufwand der Herstellung von CNTs sehr hoch ist. Ein weiterer Nachteil der bekannten Verfahren ist die Entstehung von Nebenprodukten und Verunreinigungen wie Ruß, amorphem Kohlenstoff oder unregelmäßigen Kohlenstoffröhrchen, die eine aufwendige Reinigung der CNTs nach ihrer Produktion erfordern. Insbesondere die Verwendung von porösen Materialien wie z.B. Silizium, Aluminium, Zeolithe etc. als Träger für Katalysatoren verunreinigt die Kohlenstoffnanoröhrchen. Eine anschließende Aufreinigung kann zur Auflösung des Trägermaterials führen. Zudem zeigt der Stand der Technik, dass eine strukturierte Anordnung mit definierten Abständen von CNTs auf Trägermaterialien nur unter hohem technischem Aufwand möglich ist. In keinem aus dem Stand der Technik bekannten Verfahren zur Herstellung von CNTs wird die Verwendung von Katalysatoren beschrieben, die auf der Basis von S-Layer geträgerten Materialien hergestellt wurden.

Pum et al. 1999(Trends in Biotechnol. pp. 8-12) beschreiben in einem Übersichtsartikel die Anwendung von S-Layerproteinen in der molekularen Nanotechnologie. S-Layer-Strukturen werden als Templates für die Abscheidung von Nanopartikeln für Anwendungen in der molekularen Elektronik und Optik verwendet. Des Weiteren wird die Verwendung von S-Layer Proteinen als Maske für die Strukturierung von Silizium-Oberflächen durch Ätzen beschrieben. Die so erzeugten Strukturen wurden für die Abscheidung von Nanopartikeln verwendet.

### Aufgabe

Die Aufgabe der vorliegenden Erfindung ist es, ein Verfahren zur Verfügung zu stellen, mit dessen Hilfe Kohlenstoffnanoröhrehen mit definiertem Durchmesser auf einem Substrat in gleichmäßiger Ausrichtung hergestellt werden können. Derartige Materialien können als Nanotransistoren Verwendung finden. Mit dem erfindungsgemäßen Verfahren können weiterhin Kohlenstoffröhrchen mit definierter Größe in hoher Ausbeute und Einheitlichkeit hergestellt werden.

### Allgemeine Beschreibung der Erfindung

Erfindungsgemäß wird die Aufgabe gelöst durch ein Verfahren zur Herstellung von Kohlenstoffnanoröhrchen, bei dem man
a) eine Schicht aus selbstorganisierenden Molekülen auf ein Trägersubstrat aufbring,
b) auf der Schicht aus selbstorganisierenden Molekülen anorganische Nanopartikel erzeugt,
c) die Schicht aus selbstorganisierenden Molekülen entfernt, wobei die anorganischen Nanopartikel auf dem Trägersubstrat zurückbleiben und
d) an den Nanopartikeln Nanokohlenstoffröhrchen synthetisiert werden,
wobei die Entfernung der Schicht aus S-Layer-Proteinen und die Synthese der Kohlenstoffnanoröhrchen im selben Reaktor erfolgen.

Bei dem erfindungsgemäßen Verfahren wird die Eigenschaft von selbstorganisierenden Molekülen, geordnete Schichten auszubilden, ausgenutzt, um einheitliche Nanopartikel auf einem Trägersubstrat geordnet zu erzeugen und damit Nanokohlenstoffröhrehen mit definierter Anordnung auf diesem Trägersubstrat zu synthetisieren.

Die Erfindung stellt damit ein Verfahren zur Verfügung, mit dessen Hilfe Kohlenstoffnanoröhrchen durch geträgerte anorganische Nanopartikel als Katalysatoren bzw. Kristallisationskeime in geordneter Ausrichtung auf einem Substrat synthetisiert werden können. Dazu wird zunächst auf das Trägersubstrat eine Schicht aus selbstorganisierenden Molekülen, bevorzugt S-Layer-Proteinen, aufgebracht, die ein Gitter mit definierter Porengröße bilden. Die anorganischen Nanopartikel werden dann in diesen Poren gebildet. Durch die Wahl der Moleküle kann so die Größe der entstehenden Nanopartikel gezielt beeinflusst werden. Anschließend wird die Schicht aus selbstorganisierenden Molekülen entfernt, sodass die Nanopartikel geordnet auf dem Substrat zu liegen kommen. Dort wirken sie als Katalysatoren (bzw. Kristallisationskeime) für die Synthese der Kohlenstoffnanoröhrchen. Durch die Verwendung dieser geordneten Nanopartikel als Katalysatoren zur Nanoröhrchen-Synthese wachsen auf der Oberfläche Kohlenstoffnanoröhrchen, die in ihrem Durchmesser und ihrer Anordnung der vorgegebenen Nanopartikelstruktur bzw. der Gitterstruktur der ursprünglichen Molekülmatrix folgen. So können in Abhängigkeit von der Größe der Nanopartikel Nanokohlenstoffröhrchen mit definierter Größe in hoher Ausbeute und Reinheit synthetisiert werden.

Bevorzugte selbstorganisierende Moleküle sind S-Layer-Proteine, d. h. bakterielle oder archaeale Hüllproteine, die durch Selbstorganisation eine regelmäßige, geschlossene, hochporöse Gitterstruktur unterschiedlicher Symmetrieeigenschaften bilden können. Bisher sind einige hundert S-Layer-tragende Stämme bekannt. Bevorzugte S-Layer-Proteine stammen von den Gattungen *Bacillus, Geobacillus, Lactobacillus, Lysinibacillus, Deinococcus, Sporosarcina.* Besonders bevorzugt werden S-Layer-Proteine aus den Stämmen *Lysinibacillus sphaericus* NCTC 9602 und JG-A12, *Bacillus* sp. JG-B12 und JG-B58 verwendet.

Bevorzugt sind die S-Layer-Proteine ausgewählt, aus folgenden Spezies:

**Tab.1: Bevorzugte S-Layer-Proteine**

| **S-Layer-Protein (Datenbank-nummer EMBL)** | **Spezies** | **Molekular-gewicht (in kDa)** | **Symmetrie** | **Größe der Einheitszelle (in nm)** |
|---|---|---|---|---|
| slfA (AJ866974) | *Lysinibacillus sphaericus* NCTC 9602 | 126 | p4 | 12,0 |
| slfB (AJ866975) | *Lysinibacillus sphaericus* FZD JG-A12 | 126 | p4 | 12,2 |
| sbpA (AAF22978) | *Lysinibacillus sphaericus* CCM 2177 | 132 | p4 | 12,3 |
| - (AAA50256) | *Lysinibacillus sphaericus* WHO 2362 | 125 | p2 | 9,4x12,8; 71 ° |
| - | *Bacillus* sp. FZD JG-B12 | 89 | p2 | 8,6x9,6; 83° |
| - | *Bacillus* sp. FZD JG-B35 | 91 | - | - |
| - | *Bacillus* sp. FZD JG-B41 | 91 | - | - |
| - | *Bacillus* sp. FZD JG-B53 | 137, 105 | - | - |
| - | B*acillus* sp. FZD JG-B58 | - | p4 | 16,5 |
| sslA (AM085153) | *Sporosarcina uraea* DSMZ 320 | 116 | p4 | 12,8 |

Die S-Layer-Proteinen zeichnen sich aus durch die Fähigkeit zur Selbstorganisation, zur Ausbildung von regelmäßigen Gitterstrukturen auf festen Trägern, sowie durch die Fähigkeit an der Luft/Wasser-Grenzfläche an Langmuir-Lipidfilmen in Form von großflächigen, monomolekularen Anordnungen zu kristallisieren,

Diese parakristallinen Gitterstrukturen umfassen regelmäßig angeordnete Poren einheitlicher Größe. Diese spezielle Anordnung führt zu regelmäßigen Abstandsbeziehungen zwischen Molekülgruppen des Monomers und den Metallclustern, die an das Monomer gebunden wurden. Durch die Wahl der S-Layer-Proteine (und der Kristallisationsbedingungen) kann die Porengröße und dadurch auch die Größe der entstehenden Metallcluster gezielt beeinflusst und auf das gewünschte Produkt abgestimmt werden. Die S-Layer-Proteine haben bevorzugt eine Porengröße von 2 bis 8 nm und werden zur Herstellung von Nanopartikeln mit einer Größe von 2 nm bis 25 nm verwendet. Bevorzugt verwendete S-Layer-Proteine sind in der Tabelle 1 aufgeführt. Erfindungsgemäβ werden die S-Layer-Proteine als Matrizen zur Herstellung von regelmäßig angeordneten katalytisch aktiven Nanopartikeln einer definierten Größe verwendet.

In der Erfindung wird dabei die Eigenschaft von S-Layer-Proteinen ausgenutzt, dass sie an Grenzflächen Monolagen bilden und sich zur Beschichtung von Oberflächen eignen. Dadurch können die strukturiert angeordneten anorganischen Nanopartikel auf einem Trägermaterial erzeugt werden. In mehreren Veröffentlichungen werden Verfahren zur Beschichtung verschiedener Oberflächen mit S-Layern beschrieben. Wahl, R. (PhD thesis, 2003, TU Dresden) und Kirchner, A. (PhD thesis, U 2005, TU Dresden) sowie das Patent DE10204532 beschreiben die Beschichtung von Silizium-Oberflächen und Al₂O₃-Partikeln mit S-Layern sowie die anschließende Abscheidung von Pd-, Pt-, und Ag-Clustern auf der Proteinschicht. Beschichtungsverfahren von Lipidfilmen sind aus Purn, D. et al. (Bacteriol. 1993, 175, pp. 2762-2766) und EP 0154620B1 bekannt. Verfahren zur Beschichtung von Silizium oder Al₂O₃ sind aus Pum, D. et al. (Colloids Surf. B 1999, 157-162), Wahl, R. (PhD thesis, 2003, TU Dresden), Kirchner, A. (PhD thesis, 2005, TU Dresden) und DE10204532 bekannt.

Bevorzugt wird für die Beschichtung mit S-Layer-Proteinen das S-Layer-Protein zunächst denaturiert, bevorzugt durch Zugabe von Harnstoff oder Guanidiumsalzen als Denaturans. Nach Entfernen des Denaturans, bevorzugt durch Dialyse gegen einen Puffer mit pH 8 bis pH 10 (bevorzugt pH 8,5 bis 9,5), wird das S-Layer-Protein auf der Substratoberfläche rekristallisiert. Für die Rekristallisation wird bevorzugt eine Magnesiumkonzentration von 2 bis 8 mmol/l, vorzugsweise 4 bis 6 mmol/l, und bevorzugt eine Proteinkonzentration von 2 bis 8 mg/ml, vorzugsweise 4 bis 6 mg/ml eingestellt, sowie vorzugsweise ein pH-Wert von pH 8 bis pH 10 (bevorzugt pH 8,5 bis 9,5). Für die Rekristallisation wird die oben genannte Proteinsuspension bevorzugt 24 bis 72 Stunden inkubiert.

Alternativ ist die Substratoberfläche mit Aminogruppen oder Carboxygruppen modifiziert, an die S-Layer-Proteine mittels Crosslinker kovalent gebunden werden und somit eine stabile Beschichtung gewährleisten. Alternative Beschichtungsverfahren beruhen auf der zusätzlichen Verwendung von sekundären Zellwandproteinen als Unterstützung zur Beschichtung (wie z. B nach Huber et al., 2006, small-journal vol. 2, pp. 142-150) oder auf der Einführung von Modifikationen in die Bindungsdomäne der S-Layer-Proteine.

Bevorzugte Trägermaterialien dabei sind Glas, Metalle wie Si, Al, Au, Pd, Pt, Metalloxide wie Magnesiumoxid, Siliziumdioxid, Aluminiumoxid, Metalllegierungen (z.B. Edelstahl) und Zeolithe. Besonders bevorzugte Trägermaterialien sind Metalloxide, bevorzugt ausgewählt aus SiO₂, Al₂O₃ und MgO und Metalle, wie z. B. Al.

Die vorliegende Erfindung ist dadurch gekennzeichnet, dass auf einem Träger eine Katalysatorschicht bestehend aus separierten, strukturiert angeordneten metallischen oder metalloxidischen Nanopartikeln aufgebracht wird. Zu der Herstellung dieser Katalysatoren werden S-Layer-Proteine als Matrix verwendet, die zuvor auf dem Trägematerial aufgebracht werden.

Zu Erzeugung der Nanopartikel auf der Schicht aus selbstorganisierenden Proteinen werden die beschichteten Materialien bevorzugt in einer Metallsalzlösung, wie z. B. der Salze K₂PdCl₄, K₂PtCl₄, HAuCl₄, FeCl₂, CoCl₂, NiCl₂ AgNO₃ oder Mischungen davon inkubiert. Die an die S-Layer gebundenen Metallkomplexe werden durch die Zugabe eines Reduktionsmittels, wie z. B. H₂, Borwasserstoffdimethylamin (DMAB) oder NaBH₄ reduziert. Dabei bilden sich in den Poren der S-Layer-Gitterstrukturen Nanopartikel mit einem Durchmesser von bevorzugt 2 bis 25 nm. Bevorzugte Nanopartikel sind Co-, Ni-, Fe-, Fe₂O₃-, Ag-, Cu-, Au-, Pd-, Pt-Nanopartikel und Legierungen hieraus.

Hierbei ordnen sich die hergestellten Nanopartikel gemäß der Gitterstruktur der Proteine an.

Gegenstand der Erfindung ist weiterhin ein Verfahren zur Entfernung der Proteinmatrix unter Beibehaltung der Nanopartikelstruktur auf den Trägem, was eine Voraussetzung für Abscheidung und Reinheit der Kohlenstoffnanoröhrchen ist. Die Proteine werden dabei bevorzugt durch langsames Erhitzen auf hohe Temperaturen, bevorzugt 500 bis 1000°C, besonders bevorzugt 600 bis 800 °C, in einem Reaktor (z.B. Festbettreaktor) entfernt. Dies erfolgt bevorzugt für 5 bis 30 Minuten und bevorzugt in einer in CO₂-Atinospliäre oder O₂-Atmosphäre

Erfindungsgemäß werden die Entfernung der Proteine und die Synthese der Kohlenstoffnanoröhrchen nacheinander im selben Reaktor durchgefühzt,

Die Synthese der Nanokohlenstoffröhrchen erfolgt bevorzugt durch Abscheidung aus der Gasphase (chemical vapor deposition, CVD). Bevorzugt wird dazu in Schritt d) eine gasförmige Kohlenstoffquelle auf dem Trägermaterial erhitzt. Die Kohlenstoffquelle wird allein oder vermischt mit einem Trägergas, wie NH₃ oder bevorzugt CO₂, eingesetzt. Bevorzugte Kohlenstoffquellen sind CO, ein Hydrocarbon, wie C₂H4, CH₄, C₂H₂, oder eine Organo-Metallverbindung, wie Ferrocen und Eisenpentacarbonyl. Eine besonders bevorzugte Kohlenstoffquelle ist Acetylen (C₂H₂)-Gas. Die Herstellung erfolgt dabei vorzugsweise in einem Temperaturbereich von 500 °C bis 1200 °C, bevorzugt 600 °C bis 800 °C, besonders bevorzugt bei einer Temperatur von 650 bis 680 °C. Der Druck kann oberhalb oder unterhalb des Atmosphärendrucks liegen: Bevorzugt sind Drücke von 0,1 bis 100 bar. Dabei werden die Kohlenstoffnanoröhrchen durch die bevorzugt äquimolare Reaktion von CO₂ und C₂H₂ hergestellt. Diese Gase adsorbieren auf den metallischen Nanopartikeln, die als Katalysator wirken, wobei freie C-Atome gebildet werden, die anschließend Graphit-Strukturen und flüchtige Substanzen ausbilden.

Die beiden Gase CO₂ und C₂H₂ werden dabei bevorzugt in einem molaren Verhältnis von 0,5 : 1 bis 2 : 1 eingesetzt. Ein molares Verhältnis von 1 : 1 erwies sich als besonders geeignet, um eine maximale Ausbeute an Kohlenstoffnanoröhrchen zu erzielen und die Bildung von amorphem Kohlenstoff zu minimieren.

Alternativ erfolgt die Herstellung der CNTs durch herkömmliche Verfahren, die auf der Zersetzung von Kohlenwasserstoffen beruhen.

Das in der vorliegenden Erfindung beschriebene Verfahren ermöglicht eine im Vergleich zu bisher bekannten Verfahren unkomplizierte und damit preisgünstige Herstellung von äußerst homogenen Nanoröhrchen. Grundlage ist dabei die Verwendung von S-Layer Proteinen zur unkomplizierten und preiswerten Herstellung von Nanopartikelstrukturen auf Trägermaterialien. Ein weiterer Vorteil der vorliegenden Erfindung liegt in der Art der Katalysatoraufbringung, bei der die Katalysatorpartikelgröße und die Anordnung und Abstände der Katalysatorpartikel durch die Gitterstruktur der S-Layer-Matrix vorgegeben werden. Diese Anordnung ermöglicht die vordefinierte Anordnung und Abstandsbeziehung der abgeschiedenen Kohlenstoffnanoröhrchen auf der Trägermatrix. Die Ausrichtung und Länge der Kohlentstoffnanoröhrchen werden zusätzlich von der Zusammensetzung der Katalysatorpartikel und der Art des Trägermaterials bestimmt. Preiswerte und effiziente Technologien zur Erzeugung derartig strukturierter Anordnungen von Nanoröhrchen haben eine große Bedeutung bei der Entwicklung und Herstellung von Bauteilen in der Elektronik, elektrische Aktorik, Displays.

Ein weiterer Gegenstand der Erfindung sind die mit dem erfindungsgemäßen Verfahren hergestellten Kohlenstoffnanoröhrchen.

Vorteilhaft sind die mit dem erfindungsgemäßen Verfahren hergestellten Kohlenatoffnanoröhrchen in einer Struktur auf dem Trägersubstrat angeordnet, die durch die Struktur der selbstorganisierenden Moleküle definiert wird.

Der Einsatz der mit dem erfindungsgemäßen Verfahren hergestellten Kohlenstoffnanoröhrchen erfolgt entweder an das Trägersubstrat gebunden oder nach Ablösung der CNTs vom Trägersubstrat.

Die Ablösung vom Substrat erfolgt nach Standardverfahren wie z.B. das Abschneiden der CNTs vom Substrat oder die Auflösung des Substrates durch Säurebehandlung, z. B. Inkubation mit konzentrierter Salzsäure.

Mit dem erfindungsgemäßen Verfahren werden vorteilhaft Kohlenstoffhanorohrchen einer engen Größenverteilung synthetisiert, die sich in ihrer Anordnung an der Gitterstruktur der Proteine orientieren und in ihrem Durchmesser an der Größe der verwendeten Nanopartikel. Der Durchmesser der Nanoröhrchen orientiert sich an der Größe der Nanopartikeln von 2 mm bis 30 nm. Dabei ist eine geringere Größe von 2 nm bis 10 nm Durchmesser bevorzugt, da bei einem geringerem Durchmesser bevorzugt einwandige (SWCNT) Nanoröhrchen gebildet werden. Die Länge der gebildeten Nanoröhrchen beträgt bevorzugt 0,1 µm bis 500 µm, besonders bevorzugt 0,2 µm bis 200 µm.

Die erfindungsgemäßen Kohlenstoffnanoröhrehen eignen sich insbesondere als Nano-Transistoren.

Ein weiterer Gegenstand der Erfindung ist die Verwendung von S-Layer Proteinen oder mit S-Layer-Proteinen beschichteten Substraten zur Herstellung von Kohlenstoffnanoröhrchen.

Anhand der folgenden Ausführungsbeispiele soll die Erfindung näher erläutert werden ohne die Erfindung auf diese zu beschränken.

### 1) Erzeugung der Nanostrukturen auf Trägermaterialien

Zur Herstellung einer Struktur von regelmäßig angeordneten katalytisch aktiven Nanopartikeln auf Trägermaterialien werden bakterielle Hüllproteine (S-Layer-Proteine) aus dem Stamm *Lysinibacillus sphaericus* FZD JG-A12 verwendet (siehe dazu auch Tab.1). Die gereinigten Proteine (Methode beschrieben in Raff, J. el al., 2003, Chemistry of Materials, 15 (1): 240-244), werden auf eine Trägerschicht SiO₂ aufgebracht. Zur Beschichtung werden die Proteine mit einer 6 mmol/l GuHCl-Lösung denaturiert. Die Proteinkonzentration beträgt dabei 10 mg/ml. Anschließend wird die Lösung für 24 h gegen TriDi-H₂O dialysiert. Die Lösung wird mit MgCl₂ (Endkonzentration 10 mmol/l) versetzt und auf den Träger aufgebracht, auf dem das Protein innerhalb von 48 Stunden rekristallisiert. Nach 48 h Inkubation wird die überschüssige Lösung mit einem Filterpapier entfernt. Die beschichteten Materialien werden in einer 3 mmol/l Lösung von K₂PdCl₄ inkubiert. Die an die S-Layer gebundenen Metallkomplexe werden durch die Zugabe von DMAB (Borwasserstoffdimethylamin) reduziert. Dabei bilden sich in den Poren der S-Layer-Gitterstrukturen Pd-Nanopartikel mit einem Durchmesser von 2 bis 5 nm.

### 2) Entfernung der Proteinmatrix

Die Proteinmatrix wird vom Träger entfernt, indem innerhalb von 10 min CO₂-Gas oder O₂-Gas eingeleitet wird, während die Temperatur bei 680°C gehalten wird. Bei dieser Temperatur wird die Reaktion induziert, bei der flüchtige Substanzen gebildet werden, ohne dass die vorgegebene Größe und Anordnung der metallischen Nanopartikel verändert wird. Diese Vorbehandlung ist notwendig, um die metallischen Nanopartikel dem reaktiven Gas während der anschließenden Nanoröhrchen-Synthese, bei der die Nanopartikel als Katalysator fungieren, freizulegen.

### 3) Synthese der Kohlenstoffnanoröhrchen

Die Synthese erfolgt unmittelbar nach der Entfernung der Proteinmatrix im gleichen Reaktor bei einer bevorzugten Temperatur von 680 °C und Atmosphärendruck. Es wird Acetylen (C₂H₂)-Gas zugesetzt, wobei das molare Verhältnis zu CO₂ bei 1 bleibt. Die Synthese der CNTs erfolgt nach A. Magrez et al. (2007, Angew. Chem. Int. Ed. 46, 441- 444). Danach werden die Kohlenstoffnanoröhrchen durch die äquimolare Reaktion von CO₂ und C₂H₂ hergestellt. Diese Gase adsorbieren auf den metallischen Nanopartikeln, die als Katalysator wirken, wobei freie C-Atome gebildet werden, die anschließend Graphit-Strukturen und flüchtigen Substanzen ausbilden. Dieses Verfahren unterscheidet sich damit von herkömmlichen Verfahren, die auf der Zersetzung von Kohlenwasserstoffen beruhen. Das molare Verhältnis der beiden Gase von 1 erwies sich als besonders geeignet, um eine maximale Ausbeute an Kohlenstoffnanoröhrchen zu erzielen und die Bildung von amorphem Kohlenstoff zu minimieren.

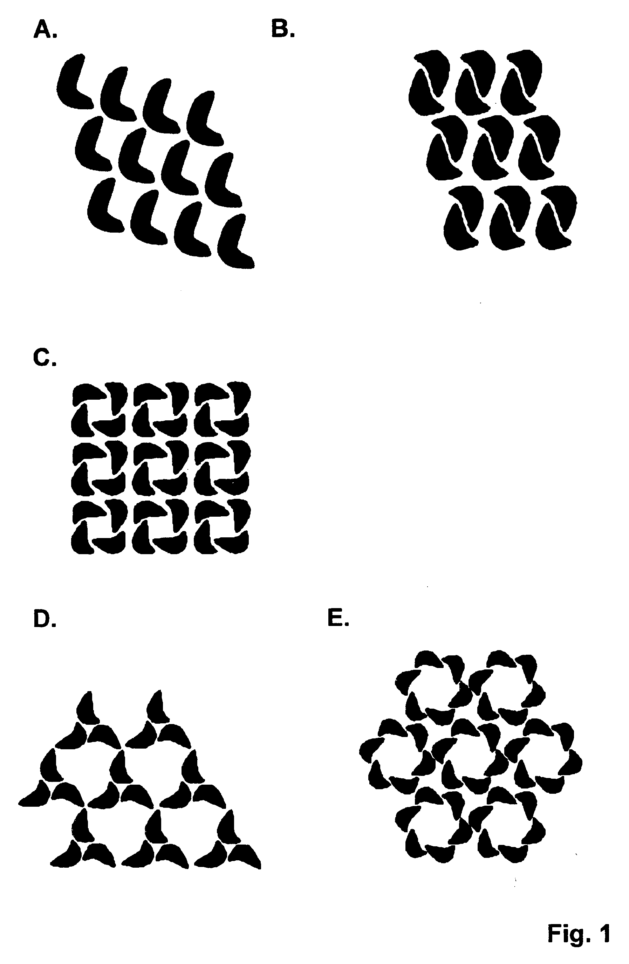

Fig. 1 A bis E zeigen Elementarzellen von S-Layer-Proteinen mit unterschiedlichen Symmetrien. Dies kann eine schräge (Fig. 1 A, B), eine quadratische (Fig. 1 C) oder eine hexagonale (Fig. 1 D,E) Symmetrie sein.

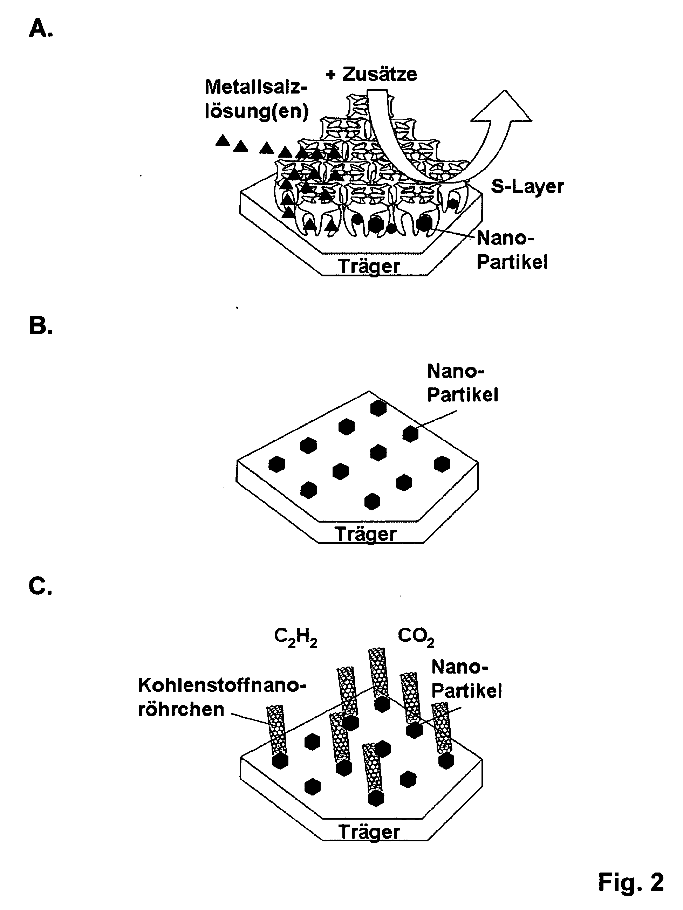

**Fig. 2** zeigt schematisch wichtige Schritte des erfindungsgemäßen Verfahrens:
   A. Erzeugung von Nanopartikeln aus einer Metallsalzlösung auf einer S-Layer-Proteinoberfläche,
   B. Erzeugung geträgerter Nanopartikel definierter Größe und in regelmäßiger Anordnung
   C. Erzeugung von Kohlenstoffnanoröhrchen an immobilisierten Nanopartikeln.

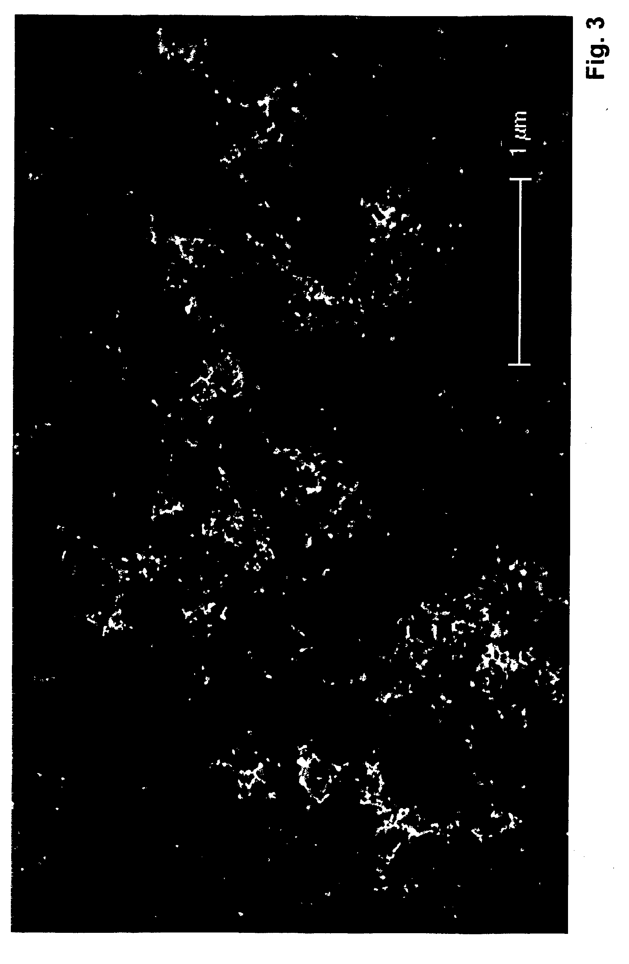

**Fig. 3** zeigt eine Rasterelektronenmikroskopieaufnahme der mit dem erfindungsgemäßen Verfahren hergestellten Kohlenstoffnanoröhrchen. Bedingungen: 10 kV, 25000 x, Entfernung der S-Layer: 10 min CO₂-Behandlung bei 680°C.

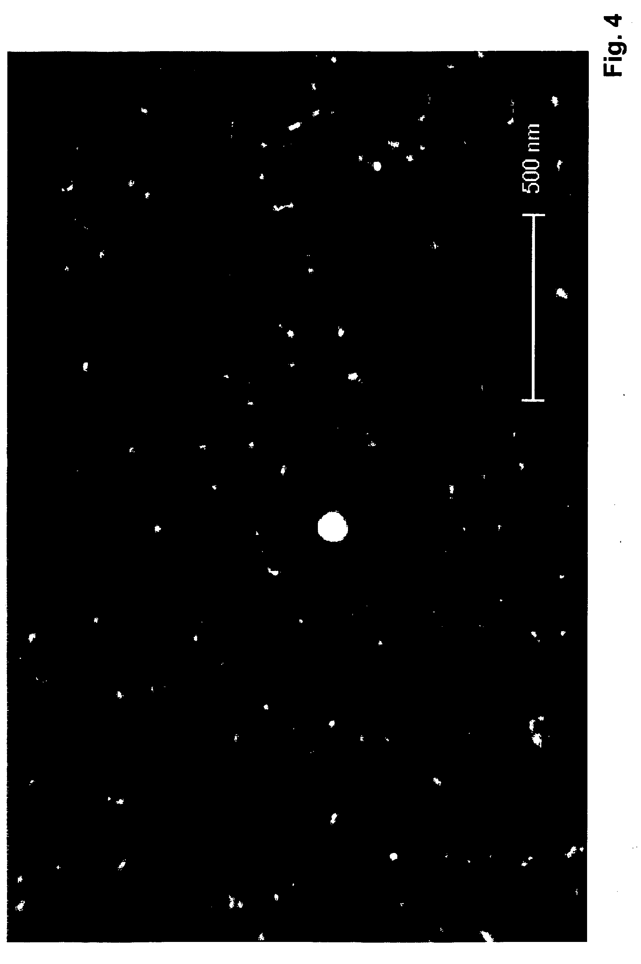

**Fig. 4** zeigt eine Rasterelektronenmikroskopieaufnahme der mit dem erfindungsgemäßen Verfahren hergestellten Kohlenstoffnanoröhrchen. Bedingungen: 10 kV, 50000 x, Entfernung der S-Layer: 10 min CO₂-Behandlung bei 680°C.

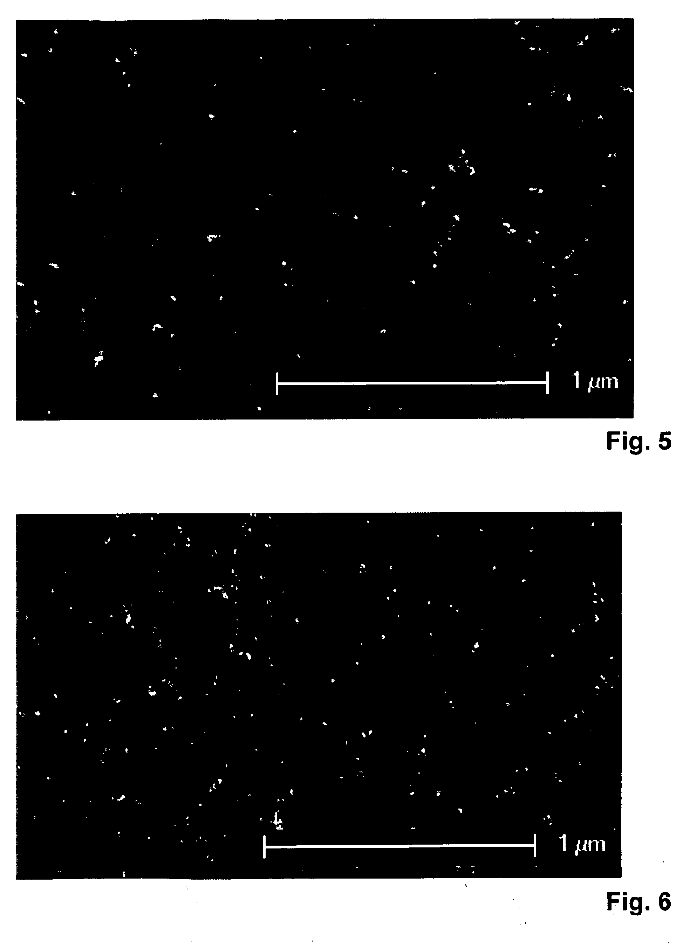

**Fig. 5** zeigt eine Rasterelektronenmikroskopieaufnahme der mit dem erfindungsgemäßen Verfahren hergestellten Kohlenstoffnanoröhrchen. Bedingungen: 10 kV, 35000 x, Entfernung der S-Layer: 10 min O₂-Behandlung bei 680°C.
**Fig. 6** zeigt eine Rasterelektronenmikroskopieaufnahme der mit dem erfindungsgemäßen Verfahren hergestellten Kohlenstoffnanoröhrchen. Bedingungen: 10 kV, 25000 x, Entfernung der S-Layer: 10 min O₂-Behandlung bei 680°C.

## Patentansprüche

1. Verfahren zur Herstellung von Kohlenstoffnanoröhrehen, **dadurch gekennzeichnet, dass** man
a) eine Schicht aus S-Layer-Proteinen auf ein Trägersubstrat aufbringt,
b) auf der Schicht aus S-Layer-Proteinen durch Inkubation mit einer Metallsalzlösung anorganische Nanopartikel erzeugt,
c) die Schicht aus S-Layer-Proteinen entfernt, wobei die anorganischen Nanopartikel auf dem Trägersubstrat zurückbleiben und
d) an den Nanopartikeln Nanokohlenstoffröhrchen synthetisiert werden, wobei die Entfernung der Schicht aus S-Layer-Proteinen und die Synthese der Kohlenstofmanoröhrchen im selben Reaktor erfolgen

2. Verfahren nach Anspruch 1, **dadurch gekennzeichnet, dass** S-Layer-Proteine der Bakteriengattungen ausgewählt aus *Bacillus, Lactobacillus, Lysinibacillus, Geobacillus, Deinococcus, Sporosarcina* verwendet werden.

3. Verfahren nach Anspruch 1 oder 2, **dadurch gekennzeichnet, dass** die Schicht aus selbstorganisierenden Molekülen unter Beibehaltung der Nanopartikelstruktur entfernt wird.

4. Verfahren nach einem der Ansprüche 1 bis 3, **dadurch gekennzeichnet, dass** die Schicht aus S-Layer-Proteinen durch langsames Erhitzen entfernt wird.

5. Verfahren nach einem der Ansprüche 1 bis 4, **dadurch gekennzeichnet, dass** durch die Wahl des S-Layerproteins in Abhängigkeit von der Gitterkonstante und der Porengröße die Größe und Ausrichtung der Kohlenstoffnanoröhrchen eingestellt wird.

6. Verfahren nach einem der Ansprüche 1 bis 5, **dadurch gekennzeichnet, dass** die Nanopartikel aus Metall oder Metallgemischen bestehen.

7. Verfahren nach einem der Ansprüche 1 bis 6, **dadurch gekennzeichnet, dass** das Trägersubstrat aus Glas, Metall, Magnesiumoxid, Siliziumdioxid, Aluminiumoxid oder Zeolith besteht.

8. Verfahren nach einem der Ansprüche 1 bis 7, **dadurch gekennzeichnet, dass** die Synthese der Kohlenstoffnanoröhrchen durch Abscheidung aus der Gasphase unter Verwendung von (C₂H₂)-Gas in Gegenwart von CO₂ erfolgt.

9. Verfahren nach einem der Ansprüche 1 bis 8, **dadurch gekennzeichnet, dass** die Kohlenstoffnanoröhrehen anschließend vom Trägersystem abgelöst werden.

10. Kohlenstoffnanoröhrchen hergestellt nach einem Verfahren der Ansprüche 1 bis 9, **dadurch gekennzeichnet, dass** die Kohlenstoffnanoröhrchen in einer Struktur auf dem Trägersubstrat angeordnet sind, die durch die Struktur der S-Layer-Proteine definiert wird.

11. Verwendung der Kohlenstoffnanoröhrchen nach Aspruch 10 als Nano-Transistoren.

12. Verwendung von S-Layer Proteinen oder mit S-Layer-Proteinen beschichteten Substraten zur Herstellung von Kohlenstoffnanoröhrchen nach Anspruch 1 bis 9.

## Claims

1. Method for producing carbon nanotubes, **characterized in that**
a) a layer of S-layer proteins is applied to a supporting substrate,
b) incubation with a metal salt solution generates inorganic nanoparticles on the layer of S-layer proteins,
c) the layer of S-layer proteins is removed, leaving behind the inorganic nanoparticles on the supporting substrate, and
d) carbon nanotubes are synthesized on the nanoparticles,
said removal of the layer of S-layer proteins and synthesis of the carbon nanotubes being carried out in the same reactor.

2. Method according to Claim 1, **characterized in that** S-layer proteins of the bacterial genera selected from *Bacillus, Lactobacillus, Lysinibacillus, Geobacillus, Deinococcus, Sporosarcina* are used.

3. Method according to Claim 1 or 2, **characterized in that** the layer of self-assembling molecules is removed with the nanoparticle structure being retained.

4. Method according to any of Claims 1 to 3, **characterized in that** the layer of S-layer proteins is removed by heating slowly.

5. Method according to any of Claims 1 to 4, **characterized in that** the size and orientation of the carbon nanotubes are adjusted by choosing the S-layer protein depending on the lattice constant and the pore size.

6. Method according to any of Claims 1 to 5, **characterized in that** the nanoparticles consist of metal or metal mixtures.

7. Method according to any of Claims 1 to 6, **characterized in that** the supporting substrate consists of glass, metal, magnesium oxide, silicon dioxide, aluminium oxide or zeolite.

8. Method according to any of Claims 1 to 7, **characterized in that** the carbon nanotubes are synthesized by way of deposition from the gaseous phase using C₂H₂ gas in the presence of CO₂.

9. Method according to any of Claims 1 to 8, **characterized in that** the carbon nanotubes are subsequently removed from the support system.

10. Carbon nanotubes prepared by a method of Claims 1 to 9, **characterized in that** the carbon nanotubes are arranged on the supporting substrate by way of a structure defined by the structure of the S-layer proteins.

11. Use of the carbon nanotubes according to Claim 10 as nano-transistors.

12. Use of S-layer proteins or of substrates coated with S-layer proteins for preparing carbon nanotubes according to Claims 1 to 9.

## Revendications

1. Procédé de fabrication de nanotubes de carbone, **caractérisé en ce que**
a) on applique sur un substrat formant support une couche de protéines de la couche S,
b) par incubation avec une solution de sels métalliques, on produit des nanoparticules inorganiques sur la couche de protéines de la couche S,
c) on élimine la couche de protéines de la couche S, les nanoparticules inorganiques restant sur le substrat formant support, et
d) on synthétise, sur les nanoparticules, des nanotubes de carbone,
l'élimination de la couche de protéines de la couche S et la synthèse des nanotubes de carbone s'effectuant dans le même réacteur.

2. Procédé selon la revendication 1, **caractérisé en ce qu'**on utilise des protéines de la couche S des genres bactériens choisis parmi *Bacillus, Lactobacillus, Lysinibacillus, Geobacillus, Dinococcus, Sporosarcina.*

3. Procédé selon la revendication 1 ou 2, **caractérisé en ce que** la couche de molécules subissant une auto-organisation est éliminée avec maintien de la structure nanoparticulaire.

4. Procédé selon l'une des revendications 1 à 3, **caractérisé en ce que** la couche de protéines de la couche S est éliminée par un lent chauffage.

5. Procédé selon l'une des revendications 1 à 4, **caractérisé en ce que** la taille et l'orientation des nanotubes de carbone sont ajustées par le choix de la protéine de la couche S en fonction de la constante de réseau et de la grosseur des pores.

6. Procédé selon l'une des revendications 1 à 5, **caractérisé en ce que** les nanoparticules sont constituées d'un métal ou de mélanges de métaux.

7. Procédé selon l'une des revendications 1 à 6, **caractérisé en ce que** le substrat formant support est constitué de verre, d'un métal, d'oxyde de magnésium, de dioxyde de silicium, d'oxyde d'aluminium ou d'une zéolite.

8. Procédé selon l'une des revendications 1 à 7, **caractérisé en ce que** la synthèse des nanotubes de carbone s'effectue par dépôt en phase gazeuse par utilisation de (C₂H₂) gazeux en présence de CO₂.

9. Procédé selon l'une des revendications 1 à 8, **caractérisé en ce que** les nanotubes de carbone sont ensuite détachés du système formant support.

10. Nanotubes de carbone fabriqués par un procédé des revendications 1 à 9, **caractérisés en ce que** les nanotubes de carbone sont disposés sur le substrat formant support selon une structure qui est définie par la structure des protéines de la couche S.

11. Utilisation des nanotubes de carbone selon la revendication 10 en tant que nanotransistors.

12. Utilisation de protéines de la couche S ou de substrats revêtus de protéines de la couche S pour la fabrication de nanotubes de carbone selon les revendications 1 à 9.
